# EUROPEAN PATENT SPECIFICATION

(11) **EP 3 685 703 B1**
(45) Date of publication and mention of the grant of the patent: **13.10.2021**
(21) Application number: 20152980.7
(22) Date of filing: 21.01.2020
(51) Int. Cl.: A46B 3/14, A46B 7/04, A46B 13/00, A46B 13/02, A46B 9/02, B60S 3/04

(54) **DEVICE FOR CLEANING WHEELS OF VEHICLES**
VORRICHTUNG ZUM REINIGEN VON FAHRZEUGRÄDERN
DISPOSITIF DE NETTOYAGE DE ROUES DE VÉHICULES

(30) Priority: 22.01.2019 IT 201900000971
(43) Date of publication of application: 29.07.2020
(73) Proprietor: Morelite S.p.A., 47899 Serravalle (SM)
(72) Inventor: BERNARDI PIRINI, Fernandino, 46018 Ponteterra (MN) (IT)
(74) Representative: Negrini, Elena

(56) References cited:
- EP-A1- 3 231 322
- GB-A- 1 449 247
- US-A- 4 615 064
- US-A1- 2017 311 708
- US-B1- 6 457 202

## Description

The present invention is part of the field concerning the care and maintenance of vehicles and refers to a device for cleaning wheels of vehicles particularly suitable for use in car washing machines for cleaning the external side of wheels of cars, vans and trucks and advantageously usable also in other fields such as the cleaning of the wheels of aircraft trolleys and wheels removed from racing vehicles and in general wherever it is necessary to clean wheels or objects similar to them.

There are known brush devices each equipped with a disk that can be fixed to a hub of a rotating device and equipped with bristles or cleaning wires fixed to the disk by gluing or welding. A disadvantage of such known devices is that wear of the bristles means that the entire brush must be replaced even if the disk is in good condition.

A further disadvantage is that the change from one type of bristles to another, e.g. from harder to more flexible and/or shorter to longer bristles, requires the availability of the respective whole brushes.

Another disadvantage of these known brushes is that they are suitable for wheels and rims whose diameters must fall within their respective narrow and specific ranges.

A further disadvantage is that the angle of the bristles with respect to the disk is affected and limited by the fact that one end of the bristles is fixed to the disk.

Another disadvantage is that the gluing, restraining or welding of one end of the bristles to the disk results in considerable repetitive stress on that end of the bristles with possible permanent deformation or fatigue cracking of the bristles.

One object of this invention is to propose a device for cleaning wheels of vehicles that allows worn or damaged bristles to be easily replaced with new bristles while retaining the original support disk.

A further object is to allow easy replacement of one type of bristles with other bristles of another type while retaining the original supporting disk.

Another object is to offer a device that allows you to vary or adjust the position of the bristles to allow optimal cleaning of wheels and rims of various sizes without the need to replace the device or parts thereof.

Another object is to allow the application of bristles even opposed and/or at almost any angle to the disk.

Another object is to provide a resilient or yielding connection of the bristles while preserving them from permanent deformation and damage.

Documents N. US 2017/311708, N. US 6 457 202, N. EP 3 231 322, N. GB 1 449 247 and N. US 4 615 064 disclose a device for cleaning wheels of vehicles with the features of the preamble of claim 1 of the present document.

The features of the invention are defined by the appended claims and are highlighted hereinafter, with specific reference to the accompanying drawings, in which:
- Figures 1-3 show respectively front, rear and sectional schematic views according to plane III-III of figure 2 of the device for cleaning wheels of vehicles, object of the present invention, in a condition of maximum proximity to its centre of its four supporting elements;
- Figures 4-7 show front, rear, sectional schematic views according to plane VI-VI of figure 5 and axonometric of the device in a condition of maximum distance at its centre of its four supporting elements;
- Figures 8 shows a schematic rear view of the device of figure 1 in which the bristles of the four support elements have been removed;
- Figure 9 shows a schematic sectional view according to plane IX-IX of figure 8;
- Figures 10-13 shows respectively axonometric, front and side schematic views of a support element of figure 1;
- Figures 14-18 show respectively front, on one side, on another side, rear and in section schematic views according to plane XVIII-XVIII of a support element of figure 1 whose bristles have been removed.

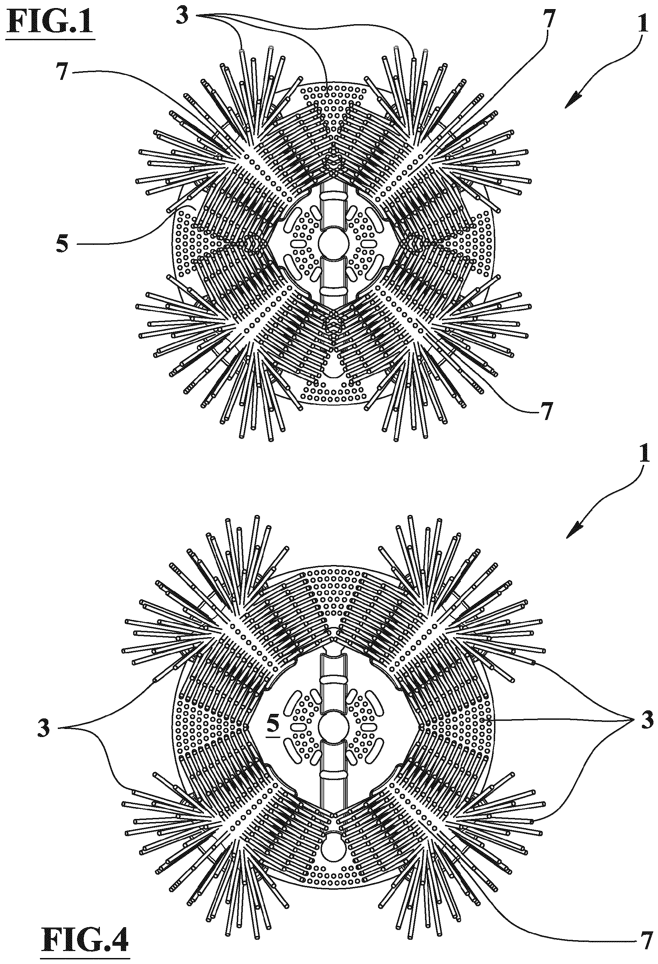

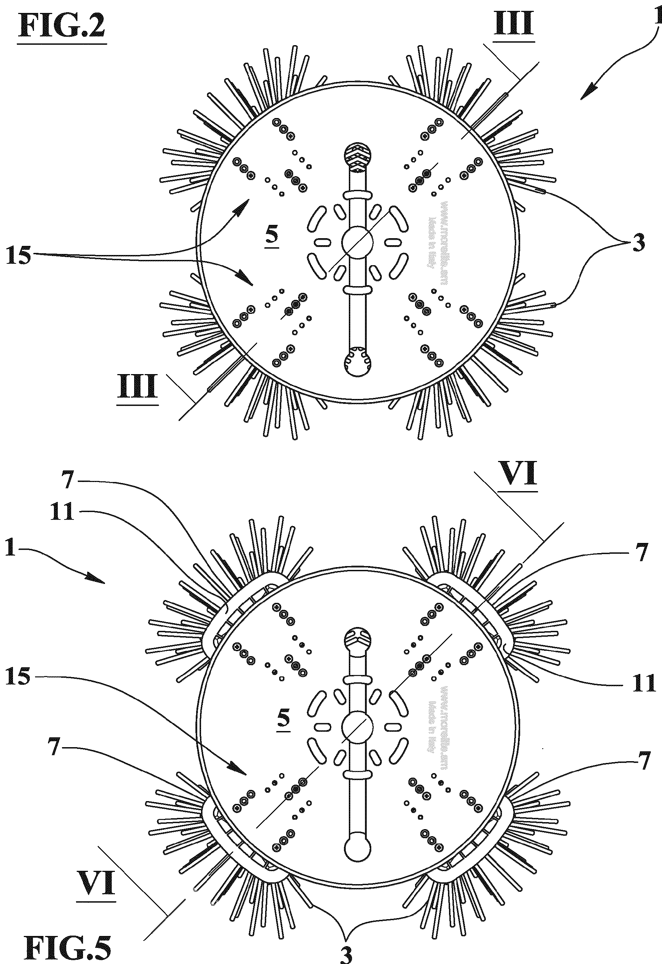

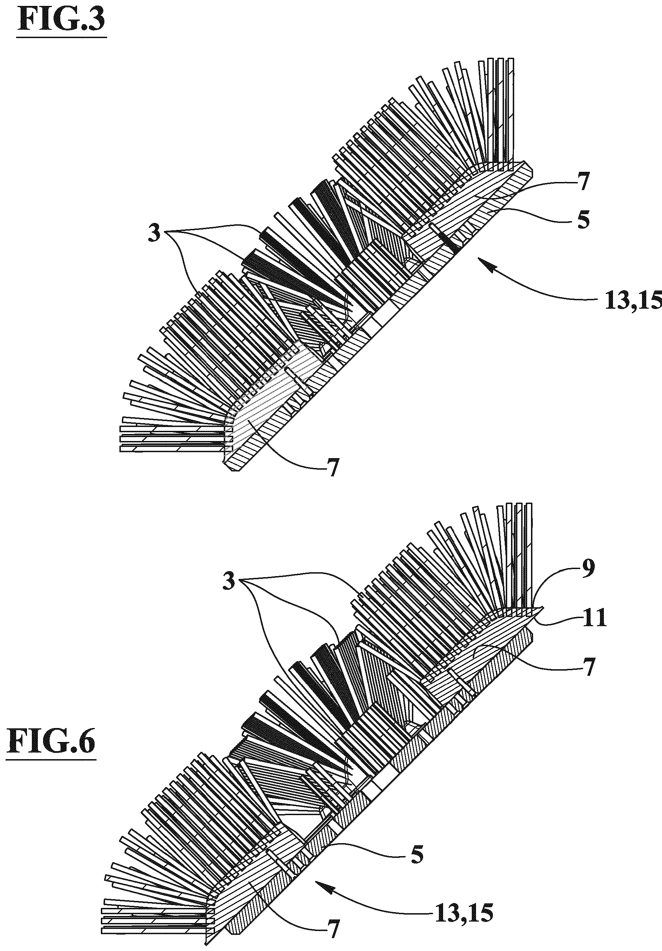

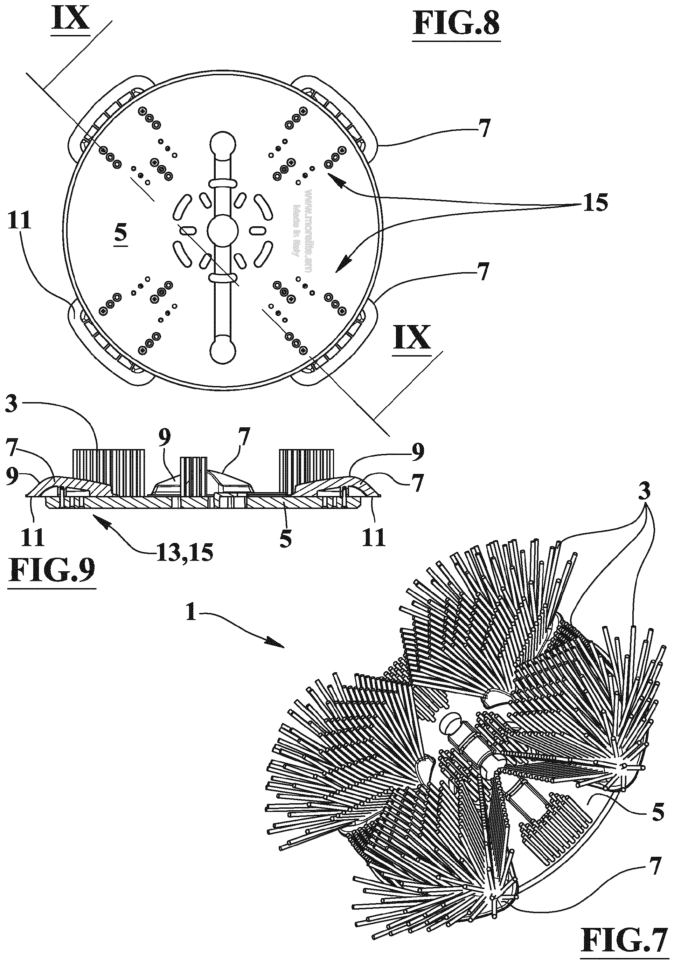

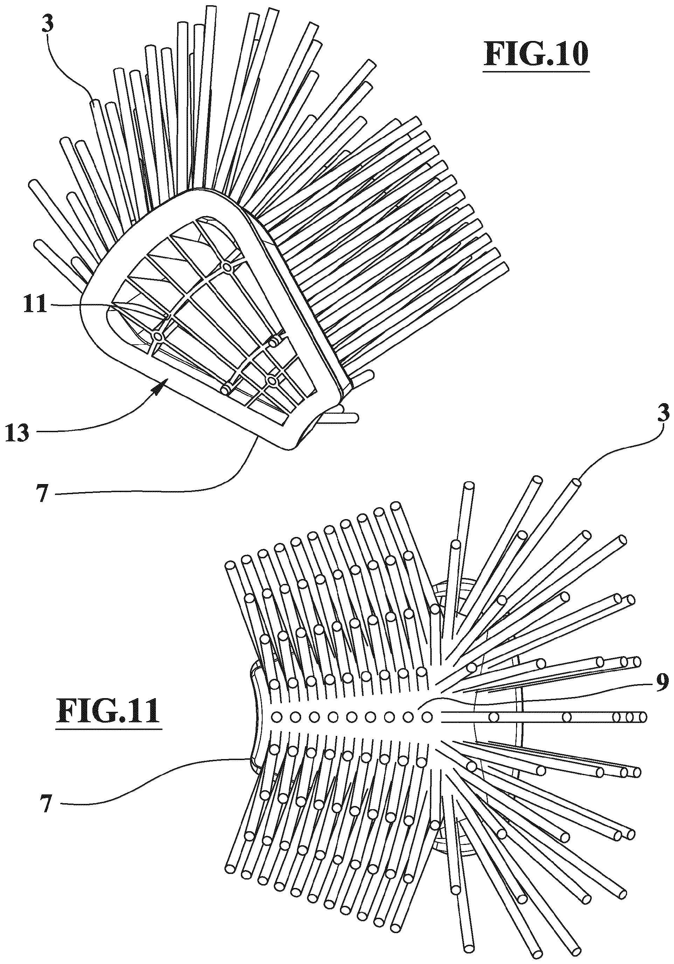

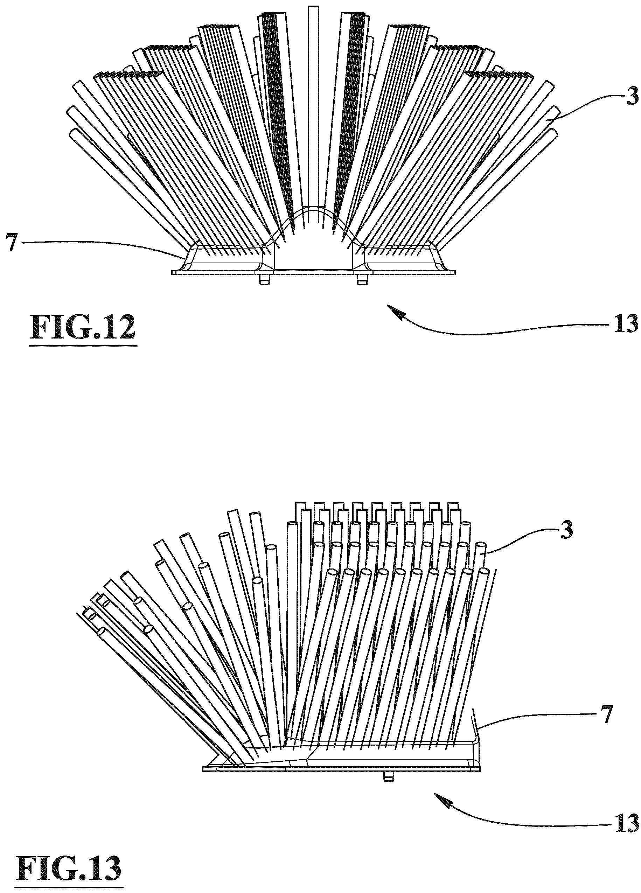

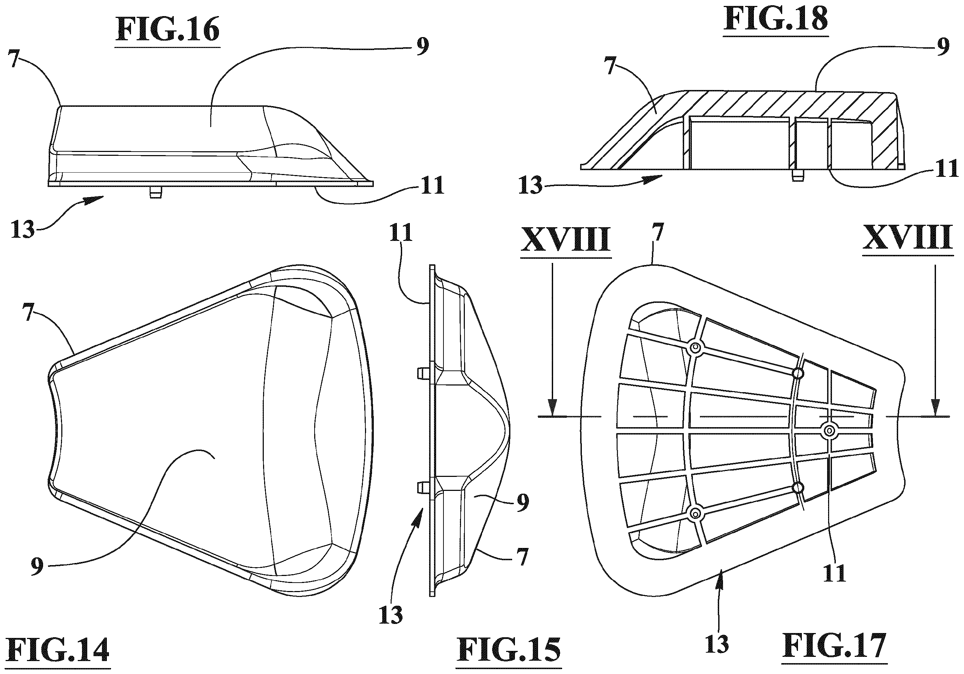

Referring to figures 1-18, numeral 1 indicates the device for cleaning wheels of vehicles. This device, which has a general discoidal shape, is equipped with cleaning bristles and is assigned to be centrally connected to a horizontal rotation shaft of a vehicle wheel cleaning apparatus, e.g. in a car or vehicle washing facility in general.

Here and below, the term bristle is used to refer to a single bristle or a set or bunch of bristles made of wires or filaments of synthetic material, such as polypropylene, polyethylene or polyamide or natural material, e.g. based on vegetable fibres.

Reference 3 of the figures may schematically represent a single bristle consisting of a flexible filament or wire, of size, section, length, elasticity and geometric and physical characteristics in general, which may be freely chosen according to the assigned use and such reference 3 may schematically represent also a bunch or bundle of bristles, for example of the bent centrally type at about 180° and mutually bound in the bending portions, also in this latter case the geometrical and physical characteristics in general of the bundles or bunches of bristles and of the single bristles that constitute them can be freely chosen according to their intended use and needs.

The bristles 3, referred therefore as single bristles or bunches or bundles of bristles, have a loose end assigned for matching with the wheel during cleaning and an opposite end, e.g. made up of the tips of the bent portions of the single bristles of the bundles or bunches of bended bristles, assigned for attachment to the remaining part of device 1.

The shaft rotates axially the device which is approached and pressed against a wheel facing it for cleaning the wheel rim and eventually the outer shoulder of the corresponding tyre too.

During the rotation of the device against the side of the wheel, the latter is expected to be sprayed with water and eventually with detergent too to obtain a thorough washing.

The device may be used for cleaning wheels mounted on different types of land and aeronautical vehicles and for dismantled wheels, in the latter case the drive shaft of the device can be vertical.

Said device for cleaning vehicle wheels and for washing such wheels comprises a disk shaped element 5, centrally fitted with a coupling for the respective rotating drive shaft of the wheel-cleaning or wheel-washing apparatus or the like, four support elements 7 each having a fastening surface 9 to which cleaning bristles 3 are fitted or fixed and having a connection surface 11, opposite to the fastening 9 one, having a first connection element 13 assigned to be engaged and fixed to a respective second connection element 15 of disk shaped element 5.

This disk shaped element 5 is preferably made of plastic material and has a thickness between one twentieth and one fifth of its external diameter.

Alternatively, it is provided that the number of support elements 7 attached to disk shaped element 5 may be less or more than 4.

Each second connection element 15 of the disk shaped element 5 is multiple for connecting the respective support element 7 at different distances from the centre of disk shaped element 5. In other words, the first connection element 13 of a support element 7 can be connected at various distances, for example three as shown in the figures, from the centre of the disk shaped element because the corresponding second connection element 15 has three radially spaced connections for the first connection element 13.

As shown in the figures, the first connection element 13 of each support element 7 carries a triplet threaded holes for connecting screws and a pair of projecting pins and the second connection element 15 of disk shaped element 5 carries, for each support element 7, three triplets of spaced through holes for said screws and three pairs of concave seats for said pins where each triplet of holes and pair of seats forms a connection assembly and where these groups of holes and seats are placed at different and respective distances in the middle of the disk shaped element 5.

It is therefore possible to fix each support element 7 to one of the three groups of triplets of holes and seats by placing it at a corresponding distance from the centre of the disk shaped element.

The number of holes and seats in each group may vary as well as the number of these groups, for example, to obtain two, four or more possible positions for each support element 7 on the disk shaped element 5.

Alternatively, it is also provided that the first connection element 13 of each support element 7 shall have multiple sets of connections and each second connection element shall have multiple sets of connections or both first and second connection element shall have multiple sets of connections to multiply the number of possible support element positions on the disk shaped element 5.

The bristles 3 of the device are divided into several bristle subassemblies, one for each support element 7 and optionally a bristles subassembly may be attached to the disk shaped element, e.g. in the spaces between the support elements 7; normally the bristles of these subassemblies and of each subassembly may be the same or have different characteristics.

The bristles may be welded or glued to the support elements 7 and eventually to the disk shaped element or preferably be restrained or otherwise fixed in recesses specially made in the elements to which they are to be fixed. For example, in the case of centrally folded bundles of bristles, the end of each bundle carrying the folds of the individual bristles shall be inserted by a tool into a recess, e.g. cylindrical and blind, made at the moment of fixing and this end is restrained in the respective recess by a restrained element, e.g. metallic, which clamps the bundle and locks it into the recess.

As an alternative to said fixing of the bristles to the support elements, device 1-7 may be fitted, for each support element 7, with a resilient covering element, e.g. elastomeric sheet or liner, applied or fixed, for example by ultrasonic welding, to the respective fastening surface 9, where the fixing end of each bristle 3 of the respective support element 7 is glued, welded or restrained to said covering element of the support element 7.

This solution makes it possible to obtain an elastic connection of the single bristles, in bundles or bunches, which protects them from excessive stress, permanent deformation and in general from damage and excessive wear.

The connection surface 11 of each support element 7 is preferably flat and has a trapezoidal or circular crown sector shape and the corresponding fastening surface 9 for bristles 3 is convex shaped curved or convex with concave or saddle.

This three-dimensional configuration of the support element 7 provides much greater freedom of orientation, distribution and spacing of the bristles compared to a flat shape e.g. of the disk shaped element, in fact the number of bristles can be greater due to the larger surface area of the support element 7 and they can even be oriented in the opposite direction to the vehicle, e.g. for better cleaning of racing car type rims.

Each support element 7 is solid or hollow and made of rigid or flexible synthetic material; preferably and as shown in the figures, each support element 7 is rigid and hollow and the respective flat fastening surface 9 includes a perimeter edge and the lower sides of a set of longitudinal and transversal baffles dividing the cavity of support element 7 and strengthen it.

The parts of the first connection element 13 of each support element 7, including, for example, holes and pins, are made in or placed at intersections between the lower edges of said baffles or they are placed at the respective nodes of a grid formed by said lower edges of the baffles.

The outer perimeter edge of the connection surface 11 of support element 7 is chamfered to facilitate its exit from certain wheelhouses covering part of the wheel or slightly interfering with the edge of the device.

As an alternative to the adjustable fixing of the support elements to the disk shaped element by means of screws, the invention requires that the first 13 and second 15 connection elements include radial guides and respective sliding carriages and that each support element 7 is equipped with a respective sliding block with respect to the disk shaped element 5.

A further alternative is that the first 13 and second 15 connection elements include radial guides and their sliding carriages and that each support element 7 is associated to screw and nut screw, cam or similar positioning means to position the support element 7 with respect to the centre of the disk shaped element 5.

The disk shaped element of the device may be equipped with holes and/or connections for water dispensers and/or detergents.

The bristles 3 eventually attached to the disk shaped element are preferably orthogonal to the latter and have the function of slowing the water flow away from the device by holding it in the cleaning and washing area and saving water and detergent.

The slowing down of the water flow out of the device and possibly its deviation towards the support element 7 can be adjusted by appropriately choosing the density and length of said orthogonal bristles of the disk shaped element.

The operation of the device requires that an operator fixes all the support elements 7 to the disk shaped element at the same distance from the centre, determined for example according to the expected dimensions of the rims and wheels, or at different distances to adapt the device to particular operating requirements; the operator then connects the device to the respective drive shaft. The disk shaped element can be equipped with several sets of support elements 7 with different and/or differently distributed bristles in order to allow the operator to adapt the device to different needs without the need for several different devices saving on the cost of unnecessary disk shaped elements.

In case of breakage or wear of a support element 7 or its bristles, the operator can easily replace it saving the cost of replacing the entire device.

## Claims

1. Device for cleaning wheels of vehicles comprising a set of bristles (3) and a disk shaped element (5) fixable at its centre to a rotating shaft of a cleaning or washing machine for wheels or the like; said device comprises at least a support element (7) to a fastening surface (9) thereof are stuck or fixed the bristles of at least a subset of said bristles (3) and having a connection surface (11), opposed to the fastening surface (9), having a first connection element (13) assigned to be fixed to a second connection element (15) of the disk shaped element (5); said device being **characterized in that** at least one of said connection elements first (13) and second (15) is multiple for fixing the at least a support element (7) at different distances from the centre of the disk shaped element (5) and **in that** each support element (7) is solid or hollow and it is made of synthetic rigid or flexible material and the connection (11) surface is flat and the fastening (9) surface is convex or convex and concave curved.

2. Device according to claim 1 **characterized in that** the set of bristles (3) is divided in several subsets of bristles were the bristles (3) of each subset are fixed to a respective support element (7) or the bristles (3) of one or more subsets of bristles are fixed to respective support elements (7) and the remaining bristles are fixed to the disk shaped element (5).

3. Device according to claim 1 **characterized in that** comprises four support elements (7), the connection surfaces (11) thereof have a trapezoid or portion of annulus plan shape and the respective ends of the bristles of the four respective subsets of bristles (3) are stuck or fixed to the fastening surfaces (9) of said four support elements (7).

4. Device according to any of the preceding claims **characterized in that** the first connection element first (13) of each support element (7) has a set of threaded holes for connection screws and a set di protruding pins and the second connection element (15) of the disk shaped element (5) has, for each of the support elements (7), two or more sets of pass through holes for said screw and two or more sets of concave sites for said pins where said sets holes and of sites are located at different and respective distances from the centre of the disk shaped element (5).

5. Device according to any of the claims 1 - 3 **characterized in that** the connection elements first (13) and second (15) comprise radial guides and respective sliding carriages for the support elements (7) and each of the latters (7) is provided with a respective block of the sliding in respect to the disk shaped element (5).

6. Device according to any of the claims 1 - 3 **characterized in that** the connection elements first (13) and second (15) comprise radial guides and respective sliding carriages for the support elements (7), each of the latters (7) is associated to positioning means of the screw and thread kind or of the cams kind or the like, for positioning the support elements (7) in respect to the centre of the disk shaped element (5).

7. Device according to any of the preceding claims **characterized in that** an end of each bristle (3) is tongued, stuck, glued or welded to the respective support element (7) in correspondence of it fastening surface (9).

8. Device according to any of the claims 1 - 6 **characterized in that** it comprises, for each support element (7), a coating element made of resilient material and stuck or fixed to the respective fastening surface (9), where the end of each bristle (3) of the respective support element (7) is glued, welded or fixed to said coating element of the support element (7).

9. Device according to any of the preceding claims **characterized in that** the flat connection surface (11) of each support element (7) comprises a perimetric rim and the lower sides of a set of longitudinal and transversal baffles; the components of the first connection element (13), such as holes and pins, are carried out or located at crosses among said lower sides of the baffles.

## Patentansprüche

1. Vorrichtung zum Reinigen von Fahrzeugrädern umfassend einen Satz Borsten (3) und ein schei- benförmiges Element (5), das an seinem Zentrum an einen Rotationsschaft einer Reinigungs- oder Säuberungsmaschine für Reifen oder dergleichen befestigbar ist; die Vorrichtung umfasst mindestens ein Abstützelement (7), an dessen Befestigungsoberfläche (9) die Borsten von mindestens eine Untermenge der Borsten (3) gesteckt oder befestigt sind und das eine Verbindungsoberfläche (11) aufweist, die der Befestigungsoberfläche (9) gegenüberliegt, die ein erstes Verbindungselement (13) aufweist, das dafür vorgesehen ist, an einem zweiten Verbindungselement (15) des scheibenförmigen Elements (5) befestigt zu werden; die Vorrichtung is **dadurch gekennzeichnet, dass** zumindest eines der ersten (13) und zweiten (15) der Verbindungselemente mehrteilig ist zum Befestigen des mindestens einen Abstützelements (7) in unterschiedlichen Abständen vom Zentrum des scheibenförmigen Elements (5) und dadurch, dass jedes Abstützelement (7) massiv oder hohl ist und aus synthetischem festen oder flexiblem Material hergestellt ist und die Verbindungsoberfläche (11) flach ist und die Befestigungsoberfläche (9) konvex oder konvex und konkav gekrümmt ist.

2. Vorrichtung nach Anspruch 1, **dadurch gekennzeichnet, dass** der Satz Borsten (3) unterteilt ist in mehrere Untermengen von Borsten, bei der die Borsten (3) einer jeden Untermenge an einem entsprechenden Abstützelement (7) befestigt sind oder die Borsten (3) von einer oder mehr Untermengen von Borsten an entsprechende Abstützelemente (7) befestigt sind und die verbleibenden Borsten sind an dem scheibenförmigen Element (5) befestigt.

3. Vorrichtung nach Anspruch 1, **dadurch gekennzeichnet, dass** sie vier Abstützelemente (7) umfasst, deren Verbindungsoberflächen (11) eine Trapezform oder einen Bereich einer ringförmigen flachen Form aufweisen und die entsprechenden Enden der Borsten der vier entsprechenden Untermengen der Borsten (3) in die Befestigungsoberflächen (9) der vier Abstützelemente (7) gesteckt oder daran befestigt sind.

4. Vorrichtung nach einem der vorhergehenden Ansprüche, **dadurch gekennzeichnet, dass** das erste Verbindungselement (13) eines jeden Abstützelements (7) einen Satz Gewindelöcher für Verbindungsschrauben und einen Satz vorstehender Stifte aufweist und das zweite Verbindungselement (15) des scheibenförmigen Elements (5) weist für jedes der Abstützelemente (7) zwei oder mehr Sätze Durchgangslöcher für die Schraube auf und zwei oder mehr Sätze konkaver Stellen für die Stifte wobei sich die Sätze von Löchern und Stellen an unterschiedlichen und entsprechenden Abständen vom Zentrum des scheibenförmigen Elements (5) befinden.

5. Vorrichtung nach einem der Ansprüche 1-3, **dadurch gekennzeichnet, dass** das erste (13) und das zweite (15) Verbindungselement radiale Führungen und entsprechende Gleitwägen für die Abstützelemente (7) umfasst und jedes der Letztgenannten (7) mit einem entsprechenden Gleitblock bezogen auf das scheibenförmige Element (5) versehen ist.

6. Vorrichtung nach einem der Ansprüche 1-3, **dadurch gekennzeichnet, dass** das erste (13) und das zweite (15) Verbindungselement radiale Führungen und entsprechende Gleitwägen für die Abstützelement (7) umfasst, jedes der Letztgenannten (7) ist Positionierungsmitteln der Schrauben- und Gewindeart oder der Nockenart oder dergleichen zugeordnet ist, zur Positionierung der Abstützelemente (7) bezogen auf das Zentrum des scheibenförmigen Elements (5).

7. Vorrichtung nach einem der vorhergehenden Ansprüche, **dadurch gekennzeichnet, dass** ein Ende einer jeden Borste (3) an das entsprechende Abstützelement (7) in Übereinstimmung zu seiner Befestigungsoberfläche (9) gefedert bzw. mittels Nut- und Federverbindung verbunden, gesteckt, geklebt oder geschweißt ist.

8. Vorrichtung nach einem der Ansprüche 1-6, **dadurch gekennzeichnet, dass** sie für jedes Abstützelement (7) ein Beschichtungselement umfasst, das aus elastischem Material hergestellt ist und in die entsprechende Befestigungsoberfläche (9) gesteckt oder befestigt ist, wobei das Ende einer jeden Borste (3) des entsprechenden Abstützelements (7) an das Beschichtungselement des Abstützelements (7) geklebt, geschweißt oder befestigt ist.

9. Vorrichtung nach einem der vorhergehenden Ansprüche, **dadurch gekennzeichnet, dass** die flache Verbindungsoberfläche (11) eines jeden Abstützelements (7) einen perimetrischen Rand und die unteren Seiten eines Satzes länglicher und querlaufender Trennwände aufweist; die Bestandteile des ersten Verbindungselements (13), wie Löcher und Stifte, an Kreuzen an den unteren Seiten der Trennwände ausgeführt sind oder sich dort befinden.

## Revendications

1. Dispositif pour nettoyer des roues de véhicules, comprenant un ensemble de poils (3) et un élément en forme de disque (5) apte à être fixé en son centre à un arbre rotatif d'une machine de nettoyage ou de lavage de roues ou analogue ; ledit dispositif comprend au moins un élément de support (7) sur une surface de fixation (9) duquel sont collés ou fixés les poils d'au moins un sous-ensemble desdits poils (3) et ayant une surface de liaison (11), opposée à la surface de fixation (9), ayant un premier élément de liaison (13) destiné à être fixé à un second élément de liaison (15) de l'élément en forme de disque (5) ; ledit dispositif étant **caractérisé par le fait qu'**au moins l'un desdits premier (13) et second (15) éléments de liaison est multiple pour fixer l'au moins un élément de support (7) à différentes distances du centre de l'élément en forme de disque (5), et **par le fait que** chaque élément de support (7) est plein ou creux et qu'il est fait de matériau synthétique rigide ou souple et que la surface de liaison (11) est plate et la surface de fixation (9) est incurvée de manière convexe ou convexe et concave.

2. Dispositif selon la revendication 1, **caractérisé par le fait que** l'ensemble de poils (3) est divisé en plusieurs sous-ensembles de poils, les poils (3) de chaque sous-ensemble étant fixés à un élément de support respectif (7) ou les poils (3) d'un ou plusieurs sous-ensembles de poils étant fixés à des éléments de support respectifs (7) et les poils restants étant fixés à l'élément en forme de disque (5).

3. Dispositif selon la revendication 1, **caractérisé par le fait qu'**il comprend quatre éléments de support (7), les surfaces de liaison (11) de ceux-ci ont une forme trapézoïdale ou de partie de plan annulaire et les extrémités respectives des poils des quatre sous-ensembles respectifs de poils (3) sont collées ou fixées aux surfaces de fixation (9) desdits quatre éléments de support (7).

4. Dispositif selon l'une quelconque des revendications précédentes, **caractérisé par le fait que** le premier élément de liaison (13) de chaque élément de support (7) a un ensemble de trous filetés pour des vis de liaison et un ensemble de broches en saillie, et le second élément de liaison (15) de l'élément en forme de disque (5) a, pour chacun des éléments de support (7), au moins deux ensembles de trous traversants de passage pour ladite vis et au moins deux ensembles de sites concaves pour lesdites broches, lesdits ensembles de trous et de sites étant situés à des distances différentes et respectives du centre de l'élément en forme de disque (5).

5. Dispositif selon l'une quelconque des revendications 1 à 3, **caractérisé par le fait que** les premier (13) et second (15) éléments de liaison comprennent des guides radiaux et des chariots coulissants respectifs pour les éléments de support (7) et chacun de ces derniers (7) comporte un bloc respectif du coulissement par rapport à l'élément en forme de disque (5).

6. Dispositif selon l'une quelconque des revendications 1 à 3, **caractérisé par le fait que** les premier (13) et second (15) éléments de liaison comprennent des guides radiaux et des chariots coulissants respectifs pour les éléments de support (7), chacun de ces derniers (7) est associé à des moyens de positionnement du type vis et filetage ou du type à cames ou analogue, pour positionner les éléments de support (7) par rapport au centre de l'élément en forme de disque (5).

7. Dispositif selon l'une quelconque des revendications précédentes, **caractérisé par le fait qu'**une extrémité de chaque poil (3) est languetée, coincée, collée ou soudée à l'élément de support respectif (7) en correspondance de sa surface de fixation (9).

8. Dispositif selon l'une quelconque des revendications 1 à 6, **caractérisé par le fait qu'**il comprend, pour chaque élément de support (7), un élément de revêtement fait de matériau élastique et collé ou fixé à la surface de fixation respective (9), l'extrémité de chaque poil (3) de l'élément de support respectif (7) étant collée, soudée ou fixée audit élément de revêtement de l'élément de support (7).

9. Dispositif selon l'une quelconque des revendications précédentes, **caractérisé par le fait que** la surface de liaison plate (11) de chaque élément de support (7) comprend un rebord périphérique et les côtés inférieurs d'un ensemble de cloisons longitudinales et transversales ; les composants du premier élément de liaison (13), tels que des trous et des broches, sont réalisés ou situés à des croisements parmi lesdits côtés inférieurs des cloisons.
